# EUROPEAN PATENT SPECIFICATION

(11) **EP 0 349 084 B1**
(45) Date of publication and mention of the grant of the patent: **05.05.1993**
(21) Application number: 89201700.5
(22) Date of filing: 27.06.1989
(51) Int. Cl.: C08F 261/04, C08F 279/02, C08G 67/02, C08L 73/00

(54) **Polyketone derived products**
Produkte auf Basis von Polyketonen
Produits à base de polycétones

(30) Priority: 27.06.1988 NL 8801633
(43) Date of publication of application: 03.01.1990
(73) Proprietor: SHELL INTERNATIONALE RESEARCH MAATSCHAPPIJ B.V., 2596 HR Den Haag (NL)
(72) Inventor: Broekhuis, Antonius Augustinus, NL-1031 CM Amsterdam (NL); Drent, Eit, NL-1031 CM Amsterdam (NL)

(56) References cited:
- EP-A- 0 263 564
- US-A- 4 143 096
- US-A- 4 866 122

## Description

The invention relates to novel polyketone derived products which can be prepared by polymerizing carbon monoxide with one or more low molecular weight olefinically unsaturated compounds in the presence of certain polymers.

Linear polymers of carbon monoxide with one or more olefinically unsaturated compounds having at most 20 carbon atoms in the molecule (for the sake of brevity referred to as A), in which the monomer units -(CO)- on the one hand, and the units -A′- originating in the applied monomers A on the other hand, occur in alternating order, can be prepared by contacting the monomers at an elevated temperature and pressure with a solution of a catalyst composition in a diluent in which the polymers are insoluble or virtually insoluble, which catalyst composition includes a Group VIII metal, a bidentate ligand and, optionally, an organic oxidant. During polymerization, the polymers are obtained in the form of a suspension in the diluent. When the desired degree of polymerization is reached, polymerization is as a rule terminated by cooling and releasing the pressure. The polymers can be isolated from the suspension for instance by filtration or centrifugation.

The above-described polymers, which contain carbonyl groups as functional groups, and are therefore also referred to as polymeric polyketones, have excellent mechanical properties, notably their strength, stiffness and impact resistance are very great. The polyketones can be used not only as such, but also in mixtures with other polymers. Polymers that are very suitable for the purpose are polymeric polyols, such as at least partially hydrolysed polyvinyl acetates and unsaturated rubbers, such as butadiene rubbers. For some uses, it may be desirable to have not only the above-mentioned physical mixtures of the polyketones with polymeric polyols or unsaturated rubbers, but to have also polymeric products in which the polyketones and polymeric polyols or unsaturated rubbers are chemically linked to one another.

US-4,143,096 describes a polymeric composition comprised of an ethylene-carbon monoxide copolymer graft-copolymerized onto a backbone polymer of at least one α-monoolefin containing 2-4 carbon atoms. The backbone may be a copolymer of one of the above α-monoolefins with minor amounts of one or more other ethylenically unsaturated monomers, such as butadiene, styrene, etc.

After attempts at reacting the polyketones with polymeric polyols or unsaturated rubbers had remained unsuccessful, further research carried out by the Applicant led to the surprising find that the desired polymeric products can be obtained by executing the polyketone preparation in the presence of a polymeric polyol or an unsaturated rubber. The preparation of polymeric products may be carried out by contacting the monomers at an elevated temperature and pressure with a diluent in which the polymeric products to be prepared are insoluble or virtually insoluble and in which diluent both the catalyst composition and the polymeric polyol or unsaturated rubber are dissolved. If a polymeric polyol is used in the preparation of the polymeric products, an organic oxidant must necessarily be present in the catalyst composition used, while, moreover, the diluent used should comprise more than 50 %vol of one or more aprotic polar compounds. Dependent on the chosen quantities of the monomers and of the polymeric polyol or unsaturated rubber, the products obtained may, in addition to polyketone bound to polymeric polyol or unsaturated rubber, include varying quantities of free polyketone. For practical use, both the polyketones which are chemically linked to polymeric polyols or to unsaturated rubbers and mixtures thereof with unbound polyketones are suitable. If desired, the unbound polyketone can be removed from the mixtures by extraction with a solvent for the polyketones involved, such as meta-cresol or hexafluoro isopropanol.

That it is indeed products consisting at least partly of polyketones which are chemically linked to polymeric polyols or to unsaturated rubbers that are obtained in the present invention is apparent for instance from the fact that at least part of the products obtained are no longer soluble in the customary solvents for these polyketones. Further indications of the existence of chemical bonds between at least part of the polyketones present in the product and the polymeric polyol or unsaturated rubber used are given by the ¹³C-NMR analyses of the products. With the aid of ¹³C-NMR analysis it was established, for instance, that a product obtained by polymerization of carbon monoxide with ethene in the presence of a butadiene rubber, contained after careful extraction with a solvent for rubber to remove any possible rubber remnants, several units -(CH₂-CH=CH-CH₂)- per 100 units -(CO)-(C₂H₄)-. With the aid of model experiments on the polymerization of carbon monoxide with ethene in the presence of the glucose that is closely related to the polymeric polyols, it could be established through ¹³C-NMR analysis that in the products thus obtained, glucose molecules were linked to polyketone chains via ester bonds.

The polymeric products prepared as described hereinbefore, which consist at least partly of polyketone that is chemically linked to polymeric polyol or unsaturated rubber and in which products unbound polyketone may also be present, are novel.

The present patent application therefore relates to polyketone derived products which can be prepared by polymerizing a mixture of carbon monoxide and one or more olefinically unsaturated compounds having at most 20 carbon atoms in the molecule, by contacting the mixture at an elevated temperature and pressure with a catalyst composition containing a Group VIII metal, a bidentate ligand and, optionally, an organic oxidant, and with a polymeric polyol or an unsaturated rubber, where both the catalyst composition and the polymeric polyol or unsaturated rubber are dissolved in a diluent in which the polyketone derived products to be prepared are insoluble or virtually insoluble, with the proviso that if a polymeric polyol is used in the preparation of the polyketone derived products, an organic oxidant is present in the catalyst composition, whilst, moreover, the diluent used consists for more than 50 %vol of one or more aprotic polar compounds. The patent application further relates to a process for purifying the former products by extracting these with a solvent that is selective to linear alternating polymers of carbon monoxide with one or more olefinically unsaturated compounds having at most 20 carbon atoms in the molecule.

In the present patent application, Group VIII metals should be taken to be the noble metals ruthenium, rhodium, palladium, osmium, iridium and platinum, and the iron group metals iron, cobalt and nickel.

In the catalyst compositions that are used in the preparation of the polymeric products of the invention, the preferred Group VIII metal is chosen from palladium, nickel and cobalt. Special preference is given to palladium as Group VIII metal. By preference, the Group VIII metal is taken up in the catalyst compositions in the form of a salt of a carboxylic acid, in particular in the form of an acetate. In addition to a Group VIII metal and a bidentate ligand, the catalyst compositions that are used in the preparation of the polymeric products of the invention preferably include an anion of an acid with a pKa of less than 4 (determined in aqueous solution at 18°C) and in particular an anion of an acid with a pKa of less than 2. Examples of acids with a pKa of less than 2 are sulphuric acid, perchloric acid, sulphonic acids, such as methanesulphonic acid, trifluoromethanesulphonic acid and para-toluenesulphonic acid, and halogen carboxylic acids, such as trichloroacetic acid, difluoroacetic acid and trifluoroacetic acid. Preference is given to a sulphonic acid, such as para-toluenesulphonic acid or to a halogen carboxylic acid, such as trifluoroacetic acid. The anion of an acid with a pKa of less than 4 may be taken up in the catalyst composition in the form of an acid and/or in the form of a salt, such as a cupric salt. Preferably, the anion is present in the catalyst compositions in a quantity of 1-1000 and in particular of 2-100 equivalents per mol of Group VIII metal. The anions of acids with a pKa of less than 4 may be present in the catalyst compositions of the invention because they have been added as separate components, or because such a palladium compound, for instance, as palladium trifluoroacetate or palladium para-tosylate is used, or because ortho-(diphenylphosphino)benzenesulphonic acid or 3-(diphenylphosphino)propanesulphonic acid is used as bidentate ligand.

In addition to a Group VIII metal, a bidentate ligand and, optionally, an anion of an acid with a pKa of less than 4, the catalyst compositions that are applied in the preparation of the polymeric products of the invention by using an unsaturated rubber, preferably also include an organic oxidant. In the preparation of the polymeric products of the invention by using a polymeric polyol, it is essential that an organic oxidant should be present in the catalyst composition used. Examples of suitable organic oxidants are 1,2- and 1,4-quinones, aliphatic nitrites, such as butyl nitrite and aromatic nitro-compounds, such as nitro-benzene and 2,4-dinitro-toluene. Preference is given to 1,4-quinones and in particular to 1,4-benzoquinone and 1,4-naphthoquinone. The quantity of organic oxidant used preferably amounts to 1-10000 and in particular to 10-5000 mol per mol of Group VIII metal.

In the catalyst compositions that are used in the preparation of the polymeric products of the invention, the bidentate ligand is preferably present in a quantity of 1-1000 and in particular 2-100 mol per mol of group VIII metal. Examples of bidentate ligands that may be mentioned are
a) Compounds of the general formula R¹R²M¹-R-M²R³R⁴, wherein R¹, R², R³ and R⁴ are the same or different, optionally polar-substituted, hydrocarbyl groups, M¹ and M² are the same or different elements chosen from the group made up of phosphorus, arsenic and antimony and R represents a bivalent bridging group containing at least two carbon atoms in the bridge. Examples of these bidentate ligands are
   1,3-bis(diphenylphosphino)propane,
   1,3-bis(diphenylarsino)propane,
   1-(diphenylphosphino)-3-(diphenylstibino)propane, and
   1-(diphenylphosphino)-2-(diphenylarsino)ethane.
b) Compounds of the general formula 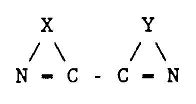 wherein X and Y represent the same or different organic bridging groups each containing three or four atoms in the bridge at least two of which are carbon atoms. Examples of these bidentate ligands are 2,2′-bipyridine and 1,10-phenanthroline.
c) Compounds of the general formula R¹R²P-R-SO₃H, wherein R, R¹ and R² have the meanings described hereinbefore. Examples of these bidentate ligands are
   ortho-(diphenylphosphino)benzenesulphonic acid,
   2-(diphenylphosphino)ethanesulphonic acid, and
   3-(diphenylphosphino)propanesulphonic acid.
d) Compounds holding one phosphorus atom and one or more nitrogen atoms, which atoms bear no hydrogen, and in which compounds each of the nitrogen atoms is linked with the phosphorus atom by an organic bridging group containing at least one carbon atom in the bridge. Examples of these bidentate ligands are
   2-cyanoethyldiphenylphosphine,
   tris(2-cyanoethyl)phosphine,
   2-pyridyldiphenylphosphine,
   bis(2-pyridyl)phenylphosphine,
   3-(diphenylphosphino)-N,N-dimethyl propionamide, and
   diphenylphosphino-N,N-dimethyl thioacetamide.
e) Compounds of the general formula R¹R²M³-R-NR³R⁴, wherein M³ is arsenic or antimony and R¹, R², R³ and R⁴ and R have the meanings given hereinbefore. An example of these bidentate ligands is 1-(diphenylarsino)-3-(dimethylamino) propane.
f) Compounds of the general formula R⁵R⁶M⁴-R-M⁵R¹, wherein R⁵ and R⁶ are the same or different, optionally polar-substituted, aryl groups, M⁴ is phosphorus or arsenic, M⁵ is sulphur or selenium and R and R¹ have the meanings given hereinbefore. Examples of these bidentate ligands are
   1-(diphenylphosphino)-3-(phenylthio)propane,
   1-(diphenylphosphino)-3-(methylthio)propane,
   1-(diphenylphosphino)-3-(2-methoxyphenylthio)propane,
   1-(diphenylarsino)-3-(phenylthio)propane, and
   1-(diphenylphosphino)-3-(phenylseleno)propane.
g) Compounds of the general formula R¹M⁶-R-M⁷R², wherein M⁶ and M⁷ are the same or different elements chosen from the group made up of sulphur, selenium and tellurium and R¹, R² and R have the meanings given hereinbefore. Examples of these bidentate ligands are
   1,2-bis(ethylthio)ethane,
   cis-1,2-bis(benzylthio)ethene,
   1,2-bis(phenylseleno)ethane, and
   1,2-bis(phenylthio)propane.

In the catalyst compositions that are used in the preparation of the polymeric products of the invention, it is preferred to employ a bidentate ligand belonging to one of the groups a) and b) mentioned hereinbefore. When a bidentate ligand belonging to group a) is used, preference is given to compounds in which M¹ and M² both represent phosphorus, in which the groups R¹, R², R³ and R⁴ are aryl groups that are equal and in which the bridging group R has three atoms in the bridge at least two of which are carbon atoms and in particular to such compounds in which the groups R¹, R², R³ and R⁴ are equal phenyl groups which contain one or more polar substituents at least one of which is situated in a position ortho in respect to the phosphorus atom to which the phenyl group involved is bound. Preferably, the polar substituents are alkoxy groups and in particular methoxy groups. Examples of such bidentate ligands are
1,3-bis[di(2-methoxyphenyl)phosphino]propane,
1,3-bis[di(2,4-dimethoxyphenyl)phosphino]propane, and
1,3-bis[di(2,4,6-trimethoxyphenyl)phosphino]propane.

Of these, 1,3-bis[di(2-methoxyphenyl)phosphino]propane is preferred.

When a bidentate ligand belonging to group b) is used, 2,2′-bipyridine and 1,10-phenanthroline are preferred.

As examples of polymeric polyols that can be suitably used in the preparation of polymeric products of the invention may be mentioned at least partially hydrolysed polyvinylacetates, polyphenols, such as poly(para-hydroxystyrenes) and polyalkenols, such as poly(3-buten-1-ol) and poly(4-penten-1-ol). At least partially hydrolysed polyvinyl acetates are preferred.

As examples of unsaturated rubbers that can be suitably used in the preparation of the products of the invention may be mentioned butadiene rubbers, styrene/butadiene rubbers, isoprene rubbers, butadiene/isoprene rubbers and styrene/isoprene rubbers. Butadiene rubbers are preferred.

The quantity of polymeric polyol or unsaturated rubber used in the preparation of the products of the invention, may vary within wide ranges. It is preferred to use 1-30 g and in particular 5-25 g polymeric polyol or unsaturated rubber per 100 ml of diluent.

For the diluent to be used in the preparation of the products of the invention should be chosen a compound or a mixture of compounds in which both the catalyst composition and the polymeric polyol or unsaturated rubber are soluble, but in which the products to be prepared are insoluble or virtually insoluble. If in the preparation of polymeric products of the invention, use is made of a polymeric polyol, the diluent used should meet an additional requirement, in that it should consist for more than 50 %vol and preferably for more than 75 %vol of one or more aprotic polar compounds. Aprotic polar compounds used by preference are dimethyl sulphoxide and N-methylpyrrolidone. When taking into account the above-mentioned requirement when using a polymeric polyol, protic polar compounds, such as lower alcohols and in particular methanol and apolar compounds, such as cyclohexane and toluene, are further suitable diluents or diluent components.

Olefinically unsaturated compounds having at most 20 carbon atoms in the molecule that are polymerized with carbon monoxide in the preparation of polymeric products of the invention are both compounds consisting exclusively of carbon and hydrogen and compounds which, in addition to carbon and hydrogen, contain one or more hetero-atoms. The monomers used by preference are olefinically unsaturated compounds with at most 10 carbon atoms in the molecule. Further, it is preferred to use olefinically unsaturated hydrocarbons as monomers. Examples of suitable hydrocarbon monomers are ethene and styrene. Novel polymeric products that were prepared in accordance with the invention are for instance:
- a reaction product of a carbon monoxide/ethene copolymer with a butadiene rubber,
- a reaction product of a carbon monoxide/styrene copolymer with a butadiene rubber,
- a reaction product of a carbon monoxide/ethene copolymer with a styrene/butadiene rubber, and
- a reaction product of a carbon monoxide/ethene copolymer with a partially hydrolysed polyvinyl acetate.

The quantity of catalyst composition employed in the preparation of the polymeric products may vary within wide limits. Per mol of olefinically unsaturated compound to be polymerized, such a quantity of catalyst composition is preferably used as to contain 10⁻⁷-10⁻³ and in particular 10⁻⁶-10⁻⁴ mol of Group VIII metal.

The preparation of the polymeric products is preferably carried out at a temperature of 20-150°C and a pressure of 20-150 bar and in particular at a temperature of 30-130°C and a pressure of 35-100 bar. The molar ratio of olefinically unsaturated monomers relative to carbon monoxide is preferably 10:1-1:10 and in particular 5:1-1:5.

The invention will now be illustrated with the aid of the following examples.

### Example 1

A reaction product of a carbon monoxide/ethene copolymer and a butadiene rubber was prepared as follows. A stirred autoclave with a capacity of 250 ml was charged with 100 ml of a solution containing 10 %w of butadiene rubber in cyclohexane. The rubber had a vinyl content of 10 %mol. After addition of 50 ml of toluene, a catalyst solution was introduced into the autoclave which comprised
15 ml methanol,
0.1 mmol palladium acetate,
2 mmol trifluoroacetic acid, and
0.15 mmol 1,3-bis[di(2-methoxyphenyl)phosphino]propane.

After any air present in the autoclave was removed by evacuation, 15 bar ethene and 30 bar carbon monoxide were blown in. Then, the contents of the autoclave were brought to 90°C. Polymerization was terminated after 5 hours by cooling to room temperature and releasing the pressure. The solid matter was filtered off and washed with toluene in order to remove unconverted rubber. After drying, 8.1 g polymer product remained behind. With the aid of ¹³C-NMR analysis it was established that the polymeric product contained about 5 units -(CH₂-CH=CH-CH₂)- per 100 units -(CO)-(C₂H₄)-. 1 g of the polymeric product was washed with hexafluoroisopropanol in order to remove carbon monoxide/ethene copolymer. After drying, 0.3 g polymer product remained behind, which in view of the wash treatments may be taken to be made up of a reaction product of carbon monoxide/ethene copolymer and butadiene rubber.

### Example 2

A reaction product of a carbon monoxide/styrene copolymer and a butadiene rubber was prepared as follows. A stirred autoclave with a capacity of 250 ml was charged with 50 ml of a solution containing 10 %w of butadiene rubber in cyclohexane. The rubber had a vinyl content of 64 %mol. After addition of 50 ml of styrene, a catalyst solution was introduced into the autoclave which comprised
15 ml methanol,
0.1 mmol palladium acetate,
0.5 mmol para-toluenesulphonic acid,
3 mmol 2,2′-bipyridine, and
20 mmol 1,4-benzoquinone.

After air present in the autoclave was removed by evacuation, 40 bar carbon monoxide was blown in. Then, the contents of the autoclave were brought to 80°C. Polymerization was terminated after 5 hours by cooling to room temperature and releasing the pressure. The solid matter was filtered off and washed with n-octane in order to remove unconverted rubber.

After drying, 7.1 g polymer product remained behind. With the aid of ¹³C-NMR analysis it was established that the polymeric product contained about 2 units -(CH₂-CH=CH-CH₂)- per 100 units -(CO)-(C₈H₈)-. 1 g of the polymeric product was washed with hexafluoroisopropanol in order to remove carbon monoxide/styrene copolymer. After drying, 0.1 g polymer product remained behind, which in view of the wash treatments may be taken to be made up of a reaction product of carbon monoxide/styrene and butadiene rubber.

### Example 3

A reaction product of a carbon monoxide/ethene copolymer and a butadiene rubber was prepared substantially in the same way as the reaction product of Example 1, but for the following differences
a) the butadiene rubber had a vinyl content of 41 %mol instead of 10 %mol,
b) the catalyst solution comprised 10 ml instead of 15 ml of methanol,
c) the reaction temperature was 80°C instead of 90°C, and
d) the reaction time was 7 hours instead of 5 hours.

After the solid matter had been washed with toluene in order to remove unconverted rubber and then dried, 11.3 g polymer product remained behind. With the aid of ¹³C-NMR analysis it was established that the polymeric material contained about 6 units -(CH₂-CH=CH-CH₂)- per 100 units -(CO)-(C₂H₄)-.

### Example 4

A reaction product of a carbon monoxide/ethene copolymer and a styrene/butadiene rubber was prepared substantially in the same way as the reaction product of Example 1, but for the following differences
a) the rubber employed was a styrene-butadiene block copolymer rubber containing 15.5 %mol styrene and having a vinyl content in the butadiene part of 11 %mol,
b) the catalyst solution comprised 10 ml instead of 15 ml of methanol,
c) the reaction temperature was 80°C instead of 90°C.

After the solid matter had been washed with toluene in order to remove unconverted rubber and then dried, 13.1 g polymer product remained behind. With the aid of ¹³C-NMR analysis it was established that the polymeric product contained about 2 units -(CH₂-CH=CH-CH₂)- per 100 units -(CO)-(C₂H₄)-.

### Example 5

A reaction product of a carbon monoxide/ethene copolymer and a partially hydrolysed polyvinyl acetate was prepared as follows. A stirred autoclave with a capacity of 250 ml was charged with a solution of 5 g of a commercial 88% hydrolysed polyvinyl acetate in 50 ml of N-methylpyrrolidone. A catalyst solution comprising
0.1 mmol palladium acetate,
1 mmol 2,2′-bipyridine,
1 mmol para-toluenesulphonic acid, and
20 mmol 1,4-benzoquinone
was dissolved in this solution.

After air present in the autoclave was removed by evacuation, 20 bar ethene and 30 bar carbon monoxide were blown in. Then, the contents of the autoclave were brought to 80°C. Polymerization was terminated after 5 hours by cooling to room temperature and releasing the pressure. The solid matter was filtered off and washed with water at 70°C in order to remove unconverted polyol.

After drying in vacuo at 70°C, 12 g of polymer product remained behind. As the product was insoluble in hexafluoroisopropanol, it may be assumed that it was completely made up of a reaction product of carbon monoxide/ethene copolymer and partially hydrolysed polyvinylacetate.

### Example 6

A reaction product of a carbon monoxide/ethene and a partially hydrolysed polyvinyl acetate was prepared substantially in the same way as the reaction product of Example 5, the difference being that the 5 g of hydrolysed polyvinylacetate was dissolved in a mixture of 100 ml of N-methylpyrrolidone and 10 ml of methanol instead of in 50 ml of N-methylpyrrolidone.

After drying, there remained behind 25.5 g of copolymer product which was insoluble in hexafluoroisopropanol.

### Example 7

A reaction product of a carbon monoxide/ethene copolymer and a partially hydrolysed polyvinylacetate was prepared substantially in the same way as the reaction product of Example 5, the difference being that the 5 g of hydrolysed polyvinylacetate was dissolved in a mixture of 100 ml of dimethyl sulphoxide and 10 ml of methanol instead of in 50 ml of N-methylpyrrolidone.

After drying, there remained behind 28.2 g of polymer product which was insoluble in hexafluoroisopropanol.

### Example 8

A reaction product of a carbon monoxide/ethene copolymer and a partially hydrolysed polyvinylacetate was prepared substantially in the same way as the reaction product of Example 5, but with the following differences
a) a solution of 5 g of the hydrolysed polyvinylacetate in a mixture of 100 ml of dimethyl sulphoxide and 5 ml of methanol was employed instead of a solution of the same in N-methylpyrrolidone, and
b) a catalyst composition was used which comprised
   0.1 mmol palladium acetate,
   0.15 mmol 1,3-bis(diphenylphoshpino)propane,
   0.2 mmol para-toluenesulphonic acid, and
   20 mmol 1,4-benzoquinone.

After drying, there remained behind 7.5 g of polymer product which was insoluble in hexafluoroisopropanol.

### Example 9

A reaction product of a carbon monoxide/ethene copolymer and glucose was prepared substantially in the same way as the reaction product of Example 5, but with the following differences
a) a solution of 5 g of D(+) glucose in a mixture of 50 ml of dimethyl sulphoxide and 5 ml of methanol was employed instead of a solution of the hydrolysed polyvinylacetate in N-methylpyrrolidone, and
b) the catalyst composition contained 2 mmol instead of 1 mmol of para-toluenesulphonic acid.

After drying, there remained behind 9 g of polymer product. ¹³C-NMR analysis of the polymer product showed that 40% of the terminal groups of the polyketone chains were linked to glucose molecules via an ester bond.

### Example 10

Example 5 was substantially repeated, except that 50 ml of methanol replaced the 50 ml of N-methylpyrrolidone.

After drying, there remained behind 15 g of polymer product which was fully soluble in hexafluoroisopropanol.

### Example 11

Example 5 was substantially repeated, except for the following differences.
a) a mixture of 100 ml of dimethyl sulphoxide and 10 ml of methanol was used instead of 50 ml of N-methylpyrrolidone, and
b) a catalyst composition was employed which comprised
   0.1 mmol palladium acetate,
   0.15 mmol 1,3-bis(diphenylphoshpino)propane, and
   0.2 mmol para-toluenesulphonic acid.

After drying, there remained behind 12 g of polymer product which was fully soluble in hexafluoroisopropanol.

Of Examples 1-11, Examples 1-8 are examples in accordance with the invention. In these examples, polymeric products in accordance with the invention were prepared by carrying out the polyketone preparation in the presence of a polymeric polyol or an unsaturated rubber.

Example 9, in which the polyketone preparation was carried out in the presence of a non-polymeric polyol, falls outside the scope of the invention and has been included in the patent application for comparison. On the strength of the results of the ¹³C-NMR analysis of the polymeric product which was obtained in Example 9, it may be assumed that in the polymeric products obtained by Examples 5-8, too, (where such an analysis is impossible) the polyketone chains and the polymeric polyols are linked to one another by ester bonds. Although in Examples 10 and 11 polymerization was carried out in the presence of a polymeric polyol, this was done by using a protic polar solvent in Example 10 and a catalyst composition containing no organic oxidant in Example 11. ¹³C-NMR analysis of the polymeric products obtained showed that these products were made up of linear alternating carbon monoxide/ethene copolymers. There had been no reaction with the polymeric polyol.

## Claims

1. Polyketone derived products, obtainable by polymerizing a mixture of carbon monoxide and one or more olefinically unsaturated compounds having at most 20 carbon atoms in the molecule, by contacting the mixture at an elevated temperature and pressure with a catalyst composition containing a Group VIII metal, a bidentate ligand and, optionally, an organic oxidant, and with a polymeric polyol or an unsaturated rubber, where both the catalyst composition and the polymeric polyol or the unsaturated rubber are dissolved in a diluent in which the polyketone derived products to be prepared are insoluble or virtually insoluble, with the proviso that if a polymeric polyol is used in the preparation of the polyketone derived products, an organic oxidant is present in the catalyst composition used, whilst, moreover, the diluent used consists for more than 50 %vol of one or more aprotic polar compounds.

2. Products as claimed in claim 1, characterized in that the catalyst composition includes palladium as Group VIII metal.

3. Products as claimed in claim 1 or 2, characterized in that the Group VIII metal is incorporated in the catalyst composition in the form of a salt of a carboxylic acid.

4. Products as claimed in one or more of claims 1-3, characterized in that the catalyst composition includes in addition an anion of an acid with a pKa of less than 4.

5. Products as claimed in claim 4, characterized in that the anion of an acid with a pKa of less than 4 is included in the catalyst composition in a quantity of 1-1000 equivalents per mol of Group VIII metal.

6. Products as claimed in one or more of claims 1-5, characterized in that the catalyst composition includes an organic oxidant in a quantity of 1-10000 mol per mol of Group VIII metal.

7. Products as claimed in one or more of claims 1-6, characterized in that the catalyst composition includes the bidentate ligand in a quantity of 1-1000 mol per mol of Group VIII metal.

8. Products as claimed in one or more of claims 1-7, characterized in that the catalyst composition includes a compound of the general formula R¹R²M¹-R-M²R³R⁴, wherein R¹, R², R³ and R⁴ are the same or different, optionally polar-substituted, hydrocarbyl groups, M¹ and M² are similar or different elements chosen from the group made up of phosphorus, arsenic and antimony and R represents a bivalent bridging group containing at least two carbon atoms in the bridge.

9. Products as claimed in one or more of claims 1-8, characterized in that the polymeric polyol used is an at least partially hydrolysed polyvinylacetate.

10. Products as claimed in one or more of claims 1-8, characterized in that the unsaturated rubber used is a butadiene rubber.

11. Products as claimed in one or more of claims 1-10, characterized in that the polymeric polyol or unsaturated rubber is used in a quantity of 1-30 g per 100 ml of diluent.

12. Products as claimed in one or more of claims 1-11, characterized in that polymerization is carried out at a temperature of 20-150°C, a pressure of 20-150 bar and a molar ratio of the olefinically unsaturated monomers relative to carbon monoxide, of 10:1-1:10, and in that per mol of olefinically unsaturated monomer to be polymerized, such a quantity of catalyst composition is used as to contain 10⁻⁷-10⁻³ mol of Group VIII metal.

13. Products as claimed in claim 1, characterized in that they have been obtained either by polymerization of a mixture of carbon monoxide with ethene in the presence of a butadiene rubber, styrene/butadiene rubber or partially hydrolysed polyvinylacetate, or by polymerization of a mixture of carbon monoxide with styrene in the presence of a butadiene rubber.

14. Process for purifying products according to any one of claims 1-13, characterized by extracting the polymeric products with a solvent that is selective to linear alternating polymers of carbon monoxide with one or more olefinically unsaturated compounds having at most 20 carbon atoms in the molecule.

## Patentansprüche

1. Produkte auf der Basis von Polyketonen, die durch Polymerisation einer Mischung aus Kohlenmonoxid und einer oder mehreren olefinisch ungesättigten Verbindung(en) mit höchstens 20 Kohlenstoffatomen im Molekül durch Kontaktieren der Mischung bei erhöhter Temperatur und Druck mit einer Katalysatorzusammensetzung, enthaltend ein Metall der Gruppe VIII, einen zweizähnigen Liganden und ,gegebenenfalls, ein organisches Oxidationsmittel, und mit einem polymeren Polyol oder einem ungesättigten Kautschuk erhältlich sind, wobei sowohl die Katalysatorzusammensetzung als auch das polymere Polyol oder der ungesättigte Kautschuk in einem Verdünnungsmittel gelöst sind, in welchem die herzustellenden Produkte auf der Basis von Polyketonen nicht löslich oder praktisch unlöslich sind, mit der Maßgabe, daß bei Einsatz eines polymeren Polyols bei der Herstellung der Produkte auf der Basis von Polyketonen, ein organisches Oxidationsmittel in der Katalysatorzusammensetzung vorliegt, während ferner das eingesetzte Verdünnungsmittel zu mehr als 50 Volumenprozent aus einer oder mehreren aprotischen polaren Verbindung(en) besteht.

2. Produkte, wie in Anspruch 1 beansprucht, dadurch gekennzeichnet, daß die Katalysatorzusammensetzung Palladium als Metall der Gruppe VIII enthält.

3. Produkte, wie in Anspruch 1 oder 2 beansprucht, dadurch gekennzeichnet, daß das Metall der Gruppe VIII in der Katalysatorzusammensetzung in Form eines Salzes einer Carbonsäure vorliegt.

4. Produkte, wie in einem oder mehreren der Ansprüche 1 bis 3 beansprucht, dadurch gekennzeichnet, daß die Katalysatorzusammensetzung zusätzlich ein Anion einer Säure mit einem pKa-Wert von weniger als 4 enthält.

5. Produkte, wie in Anspruch 4 beansprucht, dadurch gekennzeichnet, daß das Anion der Säure mit einem pKa-Wert von weniger als 4 in der Katalysatorzusammensetzung in einer Menge von 1 -1000 Äquivalenten je Mol des Metalls der Gruppe VIII vorliegt.

6. Produkte, wie in einem der Ansprüche 1 bis 3 beansprucht, dadurch gekennzeichnet ,daß die Katalysatorzusammensetzung ein organisches Oxidationsmittel in einer Menge von 1 -10000 Mol je Mol des Metalls der Gruppe VIII umfaßt.

7. Produkte, wie in einem oder mehreren der Ansprüche 1 bis 6 beansprucht, dadurch gekennzeichnet, daß die Katalysatorzusammensetzung den zweizähnigen Liganden in einer Menge von 1 bis 1000 Mol je Mol des Metalls der Gruppe VIII enthält.

8. Produkte , wie in einem oder mehreren der Ansprüche 1 bis 7 beansprucht, dadurch gekennzeichnet, daß die Katalysatorzusammensetzung eine Verbindung der allgemeinen Formel R¹R²M¹-R-M²R³R⁴ enthält, in welcher R¹, R² ,R³ und R⁴ gleiche oder verschiedene, gegebenenfalls polar-substituierte Kohlenwasserstoffgruppen sind, M¹ und M² gleiche oder verschiedene Elemente, ausgewählt aus der Gruppe, bestehend aus Phosphor, Arsen und Antimon ,darstellen, und R eine zweiwertige Brückengruppe, enthaltend mindestens 2 Kohlenstoffatome in der Brücke, ist.

9. Produkte, wie in einem oder mehreren der Ansprüche 1 bis 8 beansprucht, dadurch gekennzeichnet, daß das eingesetzte polymere Polyol ein zumindest teilweise hydrolysiertes Polyvinylacetat ist.

10. Produkte, wie in einem oder mehreren der Ansprüche 1 bis 8 beansprucht, dadurch gekennzeichnet, daß der ungesättigte Kautschuk ein Butadienkautschuk ist.

11. Produkte, wie in einem oder mehreren der Ansprüche 1 bis 10 beansprucht, dadurch gekennzeichnet, daß das polymere Polyol oder der ungesättigte Kautschuk in einer Menge von 1 bis 30 g je 100 ml Verdünnungsmittel eingesetzt werden.

12. Produkte, wie in einem oder mehreren der Ansprüche 1 bis 11 beansprucht, dadurch gekennzeichnet, daß die Polymerisation bei einer Temperatur von 20 bis 150°C, einem Druck von 20 bis 150 bar und einem Molverhältnis von olefinisch ungesättigten Monomeren zu Kohlenmonoxid von 10:1-1:10 durchgeführt wird, und daß je Mol des zu polymerisierenden olefinisch ungesättigten Monomers eine solche Menge an Katalysatorzusammensetzung eingesetzt wird, daß 10⁻⁷ - 10⁻³ Mol des Metalls der Gruppe VIII darin enthalten sind.

13. Produkte, wie in Anspruch 1 beansprucht, dadurch gekennzeichnet, daß sie entweder durch Polymerisation einer Mischung aus Kohlenmonoxid mit Ethen in Gegenwart eines Butadienkautschuks, Styrol/Butadienkautschuks oder teilweise hydrolysierten Polyvinylacetats, oder durch Polymerisation einer Mischung aus Kohlenmonoxid mit Styrol in Gegenwart eines Butadienkautschuks erhalten worden sind.

14. Verfahren zum Reinigen der nach einem der Ansprüche 1 bis 13 erhaltenen Produkte, gekennzeichnet durch Extraktion der polymeren Produkte mit einem Lösungsmittel, das für lineare alternierende Polymere von Kohlenmonoxid mit einer oder mehreren olefinisch ungesättigten Verbindung(en) mit höchstens 20 Kohlenstoffatomen im Molekül selektiv ist.

## Revendications

1. Produits à base de polycétones, qui peuvent être obtenus en polymérisant un mélange de monoxyde de carbone et d'un ou de plus d'un composé à insaturation oléfinique, présentant au plus 20 atomes de carbone dans la molécule, en mettant en contact le mélange à une température et sous une pression élevées avec une composition catalytique renfermant un métal du groupe VIII, un ligand bidenté et, facultativement, un agent oxydant organique, et avec un polyol polymère ou un caoutchouc insature, à la fois la composition catalytique et le polyol polymère ou bien le caoutchouc insaturé étant dissous dans un diluant dans lequel les produits à base de polycétone, devant être préparés, sont insolubles ou théoriquement insolubles, sous la condition que, si l'on utilise un polyol polymère dans la préparation des produits à base de polycétone, un agent oxydant organique est présent dans la composition catalytique, tandis que, en outre, le diluent utilisé est constitué par plus de 50% en volume d'un ou de plus d'un composé polaire aprotique.

2. Produits tels que revendiqués dans la revendication 1, caractérisés en ce que la composition catalytique comporte du palladium en tant que métal du groupe VIII.

3. Produits tels que revendiqués dans la revendication 1 ou 2, caractérisés en ce que le métal du groupe VIII est incorporé dans la composition catalytique sous la forme d'un sel d'un acide carboxylique.

4. Produits tels que revendiqués dans une ou plus d'une des revendications 1 à 3, caractérisés en ce que la composition catalytique comporte en outre un anion d'un acide qui présente un pKa inférieur à 4.

5. Produits tels que revendiqués dans la revendication 4, caractérisés en ce que l'anion de l'acide présentant un pKa inférieur à 4 est compris dans la composition catalytique selon une quantité de 1 à 1000 équivalents par mode de métal du groupe VIII.

6. Produits tels que revendiqués dans une ou plus d'une des revendications 1 à s, caractérisés en ce que la composition catalytique comporte un agent oxydant organique en une quantité de 1 à 10000 moles par mole de métal du groupe VIII.

7. Produits tels que revendiqués dans une ou plus d'une des revendications 1 à 6, caractérisés en ce que la composition catalytique comprend le ligand bidenté en une quantité de 1 à 1000 moles par mole de métal du groupe VIII.

8. Produits tels que revendiqués dans une ou plus d'une des revendications 1 à 7, caractérisés en ce que la composition catalytique comprend un composé de formule générale R¹R²M¹-R-M²R³R⁴, dans laquelle R¹, R², R³ et R⁴ sont des groupes, identiques ou différents, facultativement à substitution polaire, M¹ et M² sont des éléments identiques ou différents choisis parmi le groupe constitué par le phosphore, l'arsenic et l'antimoine et R représente un groupe de pontage bivalent renfermant au moins deux atomes de carbone dans le pont.

9. Produits tels que revendiqués dans une ou plus d'une des revendications 1 à 8, caractérisés en ce que le polyol polymère utilisé est un polyacétate de vinyle au moins partiellement hydrolysé.

10. Produits tels que revendiqués dans une ou plus d'une des revendications 1 à 8, caractérisés en ce que le caoutchouc insaturé utilisé est un caoutchouc de butadiène.

11. Produits tels que revendiqués dans une ou plus d'une des revendications 1 à 10, caractérisés en ce que le polyol polymère ou de caoutchouc insaturé est utilisé en une quantité de 1 à 30 g pour 100 ml de diluent.

12. Produits tels que revendiqués dans une ou plus d'une des revendications 1 à 11, caractérisés en ce que la polymérisation est mise en oeuvre à une température de 20 à 150°C, sous une pression de 20 à 150 bars et selon un rapport molaire des monomères à insaturation oléfinique par rapport au monoxyde de carbone, de 10:1-1:10, et que, par mode de monomère à insaturation oléfinique devant être polymérisé, on utilise la composition catalytique en une quantité telle qu'elle renferme 10⁻⁷ à 10⁻³ modes de métal du groupe VIII.

13. Produits tels que revendiqués dans la revendication 1, caractérisés en ce qu'ils ont été obtenus soit par polymérisation d'un mélange de monoxyde de carbone avec d'éthylène en présence d'un caoutchouc de butadiène, d'un caoutchouc de styrène/butadiène ou d'un polyacétate de vinyle partiellement hydrolysé, ou bien par polymérisation d'un mélange de monoxyde de carbone avec du styrène en présence d'un caoutchouc de butadiène.

14. Procédé pour la purification de produits selon l'une quelconque des revendications 1 à 13, caractérisés en ce que l'on extrait les produits polymères avec un solvant qui est sélectif vis-à-vis des polymères linéaires alternés de monoxyde de carbone avec un ou plus d'un composé à insaturation oléfinique, qui présente au plus 20 atomes de carbone dans la molécule.
